# EUROPEAN PATENT APPLICATION

(11) **EP 3 181 646 A1**
(43) Date of publication of application: **21.06.2017**
(21) Application number: 16203583.6
(22) Date of filing: 13.12.2016
(51) Int. Cl.: C09D 183/04, C09D 183/06

(54) **ELECTRONIC DEVICE HAVING ANTI-FINGERPRINT COATING LAYER**

(30) Priority: 18.12.2015 KR 20150181987
(71) Applicant: Samsung Electronics Co., Ltd., Suwon-si, Gyeonggi-do (KR)
(72) Inventor: Hiromitsu, Muko, Suwon-si, Gyeonggi-do (KR); Koh, Young Deog, Seongnam-si, Gyeonggi-do (KR)
(74) Representative: Gulde & Partner

(57) **Abstract**

Embodiments of the present disclosure relate to devices having an ultrathin anti-fingerprint coating layer. According to an aspect of the present invention, a device includes a housing formed of a hairline-processed metal substrate and an anti-fingerprint coating layer disposed on a surface of the housing. The anti-fingerprint coating comprises polysilsesquioxane.

## Description

### TECHNICAL FIELD

Embodiments of the present disclosure relate to electronic devices having an ultrathin anti-fingerprint coating layer.

### BACKGROUND

Recently, stainless-steel has been used as a material for front doors of refrigerators to obtain luxurious and clean appearances. However, the surfaces of refrigerators made of stainless-steel may be stained with time by fingerprints of users. Particularly, fingerprints of the users may stand out well on hairline-processed stainless-steel surfaces deteriorating the luxurious and clean appearances of the refrigerator.

Various coating methods have been applied to the surfaces of refrigerators to prevent deterioration of the luxurious and clean appearances. For example, an anti-fingerprint (AF) coating layer may be applied to the surfaces by spraying or deposition. However, although an anti-fingerprint material-coated surface may be easily cleaned and slippery, luxurious and clean appearance of stainless-steel may deteriorate due to a thickness of a coating layer and haze.

### SUMMARY

To address the above-discussed deficiencies, it is a primary object to provide an electronic device having an ultrathin anti-fingerprint coating layer on the surface of a housing formed of a hairline-processed metal substrate.

Additional aspects of the disclosure will be set forth in part in the description which follows and, in part, will be obvious from the description, or may be learned by practice of the disclosure.

According to an aspect of the present invention, an electronic device includes a housing formed of a hairline-processed metal substrate and an anti-fingerprint coating layer comprising polysilsesquioxane disposed on a surface of the housing.

The polysilsesquioxane may have a structural unit represented by Formula 1 below:

Formula 1 RSiO_{3/2}

where R comprises at least one selected from the group consisting of an epoxy group, an alkyl group, and a vinyl group.

The anti-fingerprint coating layer may have a thickness of 0.01 to 1.0 *µ*m.

The anti-fingerprint coating layer may be formed by coating a coating composition comprising the polysilsesquioxane.

The coating composition comprises 0.1 to 60 parts by weight of the polysilsesquioxane based on a total weight of the coating composition.

All or a portion of the surface of the housing may be hairline-processed, and the hairline-processed portion of the surface of the housing has a surface roughness of 150 to 300 nm.

The housing may be formed of a stainless-steel material.

The electronic device may further comprise a metal coating layer disposed between the housing and the anti-fingerprint coating layer.

The metal coating layer may comprise at least one metallic element selected from the group consisting of molybdenum (Mo), zirconium (Zr), titanium (Ti), manganese (Mn), and silicon (Si).

The electronic device may comprise at least one selected from the group consisting of a refrigerator, a robot cleaner, a display apparatus, an air conditioner, and a mobile device.

According to another aspect of the present invention, a method of protecting a device includes receiving a housing formed of a hairline-processed metal substrate and disposing an anti-fingerprint coating layer comprising polysilsesquioxane on a surface of the housing.

The polysilsesquioxane may have a structural unit represented by Formula 1 below:

Formula 1 RSiO_{3/2}

where R comprises at least one selected from the group consisting of an epoxy group, an alkyl group, and a vinyl group.

The anti-fingerprint coating layer may have a thickness of 0.01 to 1.0 *µ*m.

The anti-fingerprint coating layer may be formed by coating a coating composition comprising the polysilsesquioxane.

The coating composition comprises 0.1 to 60 parts by weight of the polysilsesquioxane based on a total weight of the coating composition.

All or a portion of the surface of the housing may be hairline-processed, and the hairline-processed portion of the surface of the housing has a surface roughness of 150 to 300 nm.

The housing may be formed of a stainless-steel material.

The method may further comprise disposing a metal coating layer between the housing and the anti-fingerprint coating layer.

The metal coating layer may comprise at least one metallic element selected from the group consisting of molybdenum (Mo), zirconium (Zr), titanium (Ti), manganese (Mn), and silicon (Si).

The electronic device may comprise at least one selected from the group consisting of a refrigerator, a robot cleaner, a display apparatus, an air conditioner, and a mobile device.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a perspective view of a refrigerator as an example of an electronic device.
FIG. 2 illustrates a cross-sectional view of a storage compartment door of FIG. 1 taken along line AA'.
FIG. 3 illustrates an enlarged view of a portion marked with a circle of FIG. 2.
FIG. 4 illustrates cross-sections of the anti-fingerprint material-coated substrates having different amounts of polysilsesquioxane included in the coating composition.
FIG. 5 is a cross-sectional view illustrating a structure of an anti-fingerprint material-coated substrate according to another embodiment.

### DETAILED DESCRIPTION

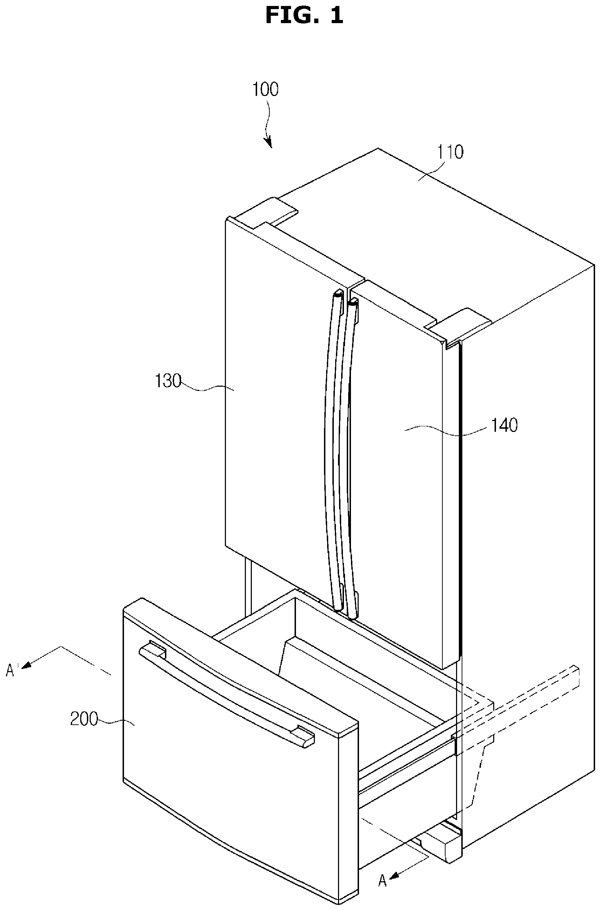

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device.

Reference will now be made in detail to the embodiments of the present disclosure, examples of which are illustrated in the accompanying drawings, wherein like reference numerals refer to like elements throughout.

Hereinafter, an device, which may be an electronic device, according to an embodiment will be described with reference to the accompanying drawings.

An electronic device according to an embodiment has an outer surface formed of a hairline-processed metal substrate having a surface on which an ultrathin anti-fingerprint coating layer is formed. That is, a housing of the electronic device may be formed of an anti-fingerprint material-coated substrate. The anti-fingerprint material-coated substrate is a functional substrate having a luxurious and clean metallic look and coated with an anti-fingerprint material. The anti-fingerprint material-coated substrate may be applied to outer surfaces of various electronic device. For example, the anti-fingerprint material-coated substrate may be applied to external surfaces of electronic devices including refrigerators, robot cleaners, display apparatuses, air conditioners, and mobile devices. Hereinafter, a refrigerator will be exemplarily described as the electronic device according to an embodiment for descriptive convenience.

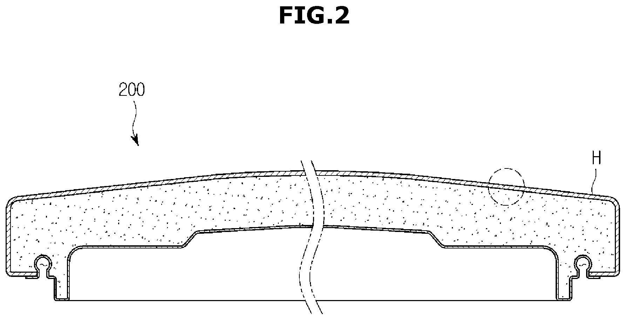

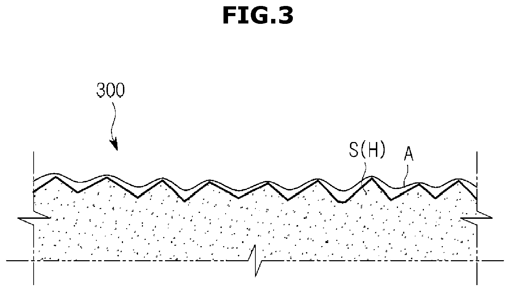

FIG. 1 is a perspective view of a refrigerator as an example of an electronic device. FIG. 2 is a cross-sectional view of a storage compartment door of FIG. 1 taken along line AA'. FIG. 3 is an enlarged view of a portion marked with a circle of FIG. 2.

Referring to FIGS. 1 to 3, a refrigerator 100 may include a main body 110 and storage compartment doors 130, 140, and 200 rotatably coupled to a front surface of the main body 110. An anti-fingerprint material-coated substrate 300 may be applied to the main body 110 or the storage compartment doors 130, 140, and 200. Hereinafter, the embodiment will be described based on a case in which the anti-fingerprint material-coated substrate 300, described below with reference to FIG. 3, is applied to the storage compartment doors 130, 140, and 200 for descriptive convenience.

Referring to FIGS. 2 and 3, the storage compartment doors 130, 140, and 200 may include a housing H formed of a hairline-processed metal substrate S, and an anti-fingerprint coating layer A formed on the surface of the housing H and including polysilsesquioxane.

The housing H is a box-shaped portion surrounding all mechanical devices, such as boxes accommodating parts or frames holding equipment, and may include accessories of the housing H. Hereinafter, the accessories of the housing H may be understood as a portion of the housing H constituting the external appearance such as handles of the storage compartment doors 130, 140, and 200.

The housing H may be formed of the metal substrate S, made of, e.g., a stainless-steel material. In a broad sense, it may be understood that the housing H may also be made of an alloy including a stainless-steel material as well as made of the stainless-steel material alone. That is, the housing H may be formed of an alloy of stainless-steel and at least one of aluminum (Al), zinc (Zn), magnesium (Mg), steel use stainless (SUS), and steel.

The surface of the housing H may be hairline-processed. Hairline processing, which forms scratches on a surface in a predetermined direction by a mechanical method, is generally performed in decorative plating. For example, the hairline-processed surface may have protrusions and grooves and a surface roughness of 150 to 300 nm, measured using an SJ-400 measuring device (manufactured by Mitutoyo Corporation). However, formation of the protrusions and grooves of the hairline-processed surface is not limited thereto and may vary according to types and purposes of products.

The anti-fingerprint coating layer A may be formed on the surface of the housing H. The anti-fingerprint coating layer A may be formed on the entire surface of the housing H or a portion thereof. For example, the anti-fingerprint coating layer A may be applied to the hairline-processed of the surface of the housing H and may also be applied to a neighboring portion of the hairline-processed portion.

The anti-fingerprint coating layer A may be formed of an organic-inorganic hybrid material, e.g., polysilsesquioxane.

Siloxane having Si-O-Si bonds may be generally classified into four types (M, D, T, and Q) as shown in Table 1.

**Table 1**

| Q | T | D | M | |
|---|---|---|---|---|
| 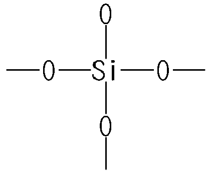 | 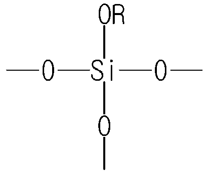 | 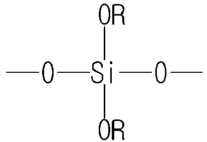 | 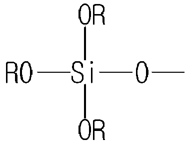 | 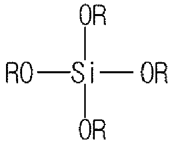 |
| | 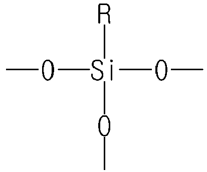 | 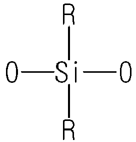 | 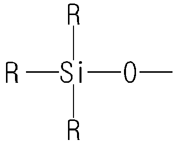 | 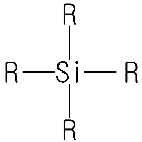 |

Referring to Table 1, polysiloxane represented by formula [RSiO_{3/2}]ₙ is referred to as type T structural unit among the four types of structural names, and a scientific name thereof is polysilsesquioxane.

In general, polysilsesquioxane is synthesized by hydrolysis-polymerization. At present, hydrolysis-polymerization using trialkoxysilane (RSi(OR)₃) or trichlorosilane (RSiCl₃) is widely known. The synthesized polysilsesquioxane may have a cage structure such as hexamer, octamer, decamer, and dodecamer or a low molecular weight random, branched structure. Polysilsesquioxane may have thermal stability and optical transparency by substituting functional groups of polysilsesquioxane.

For example, polysilsesquioxane applied to the embodiment of the present disclosure may be a compound polymerized using a repeating unit represented by [RSiO_{3/2}] of Formula 1.

More particularly, the polysilsesquioxane may have a structure represented by Structural Formula 1 below.

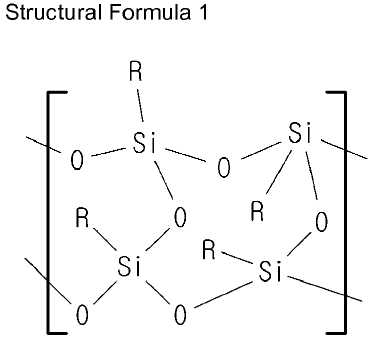

In Structural Formula 1, R includes at least one selected from the group consisting of an epoxy group, an alkyl group, and a vinyl group.

Since the anti-fingerprint coating layer A formed of the organic-inorganic hybrid material has high transparency, metallic gloss of the substrate may be maintained. Also, the coating layer may have a high surface hardness due to high hardness of the organic-inorganic hybrid material, thereby improving durability of products.

The anti-fingerprint coating layer A may be applied to a surface of a product as an ultrathin film as illustrated in FIG. 3. Referring to FIG. 3, the thickness of the anti-fingerprint coating layer A is greater in grooves of the surface of the metal substrate S than protrusions thereof. While forming the anti-fingerprint coating layer A, the coating composition may flow down along the surfaces of the protrusions and grooves. Thus, there is a difference in thickness of the anti-fingerprint coating layer A between protrusions and grooves.

The ultrathin anti-fingerprint coating layer A may have a thickness of 0.01 to 1.0 *µ*m. If the anti-fingerprint coating layer A is too thin, the surface of the substrate may not have anti-fingerprint properties. If the anti-fingerprint coating layer A is too thick, the anti-fingerprint coating layer A may not be transparent and hairline tactile impression of the surface of the substrate may not be maintained.

Results of tests for the anti-fingerprint coating layer A on transparency, hairline tactile impression, fingerprint resistance, and chemical resistance with respect to thickness of the anti-fingerprint coating layer A are shown in Table 2 below. Chemical resistance is tested by evaluated alkali resistance of a sample coated on STS 201 BA t0.5mm Art.

**Table 2**

| Thickness of anti-fingerprint coating layer | | Less than 0.01 *µ*m | 0.01 ∼ 1.0 *µ*m | Greater than 1.0 *µ*m |
|---|---|---|---|---|
| Real metallic feeling | Transparency of coating layer | Pass | Pass | Fail |
| | Hairline tactile impression | Pass | Pass | Fail |
| Fingerprint resistance | | Fail | Pass | Fail |
| Alkali resistance | | Fail | Pass | Pass |

Referring to Table 2, if the thickness of the anti-fingerprint coating layer A is less than 0.01 *µ*m, the coating layer may not have fingerprint resistance and chemical resistance.

On the contrary, if the thickness of the anti-fingerprint coating layer A is greater than 1.0 *µ*m, transparency of the anti-fingerprint coating layer A may not be maintained, and hairline tactile impression of the surface of the substrate may not be maintained.

Meanwhile, if the thickness of the anti-fingerprint coating layer A is in the range of 0.01 to 1.0 *µ*m as an ultrathin layer, the anti-fingerprint coating layer A may not only have transparency but also exhibit metallic feeling of the substrate and hairline tactile impression of the surface of the substrate even after the coating process. Also, the surface of the substrate may have fingerprint resistance and chemical resistance by forming the anti-fingerprint coating layer A.

As a result, it was confirmed that the anti-fingerprint coating layer A formed as an ultrathin layer having a thickness controlled in an appropriate range has excellent properties.
Meanwhile, the hairline tactile impression of the surface of the housing H may be controlled by adjusting the amount of polysilsesquioxane of the anti-fingerprint coating composition forming the anti-fingerprint coating layer A. For example, the coating composition may include 0.1 to 60 parts by weight of polysilsesquioxane based on a total weight of the coating composition. An example of formation of the anti-fingerprint coating layer A on the surface of the metal substrate S with respect to the amount of polysilsesquioxane will be described.

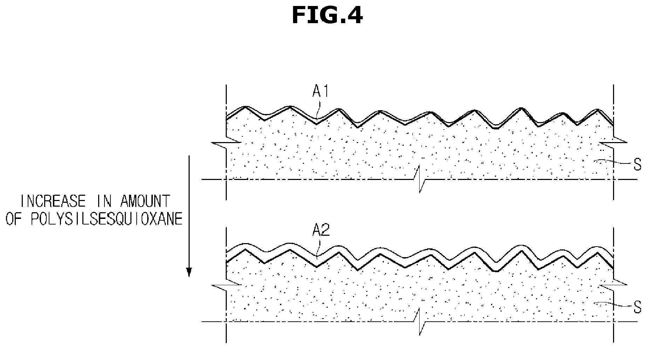

FIG. 4 illustrates cross-sections of the anti-fingerprint material-coated substrate 300 having different amounts of polysilsesquioxane included in the coating composition.

Referring to FIG. 4, it may be confirmed that as the amount of polysilsesquioxane decreases, the thickness of the anti-fingerprint coating layer A1 decreases and the surface roughness of the anti-fingerprint material-coated substrate 300 increases.

On the contrary, it may be confirmed that as the amount of polysilsesquioxane increases, the thickness of the anti-fingerprint coating layer A2 increases and the surface roughness of the anti-fingerprint material-coated substrate 300 decreases.

That is, the surface roughness of the anti-fingerprint material-coated substrate 300 may be controlled by adjusting the amount of polysilsesquioxane in accordance with desired surface characteristics.

The case in which the anti-fingerprint material-coated substrate 300 according to an embodiment is applied to the housing H of an electronic device has been described above. Descriptions provided above regarding the anti-fingerprint material-coated substrate 300 with reference to FIGS. 1 to 3 will not be repeated.

Next, a modified example of the anti-fingerprint material-coated substrate 300 will be described. The modified example of the anti-fingerprint material-coated substrate 300 may also be applied to the external surface of the electronic device.

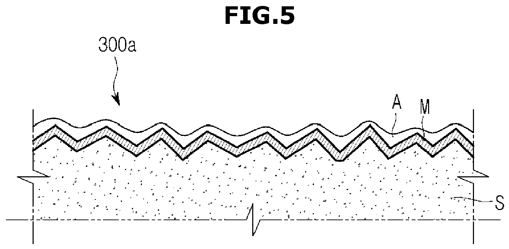

FIG. 5 is a cross-sectional view illustrating a structure of an anti-fingerprint material-coated substrate 300a according to another embodiment. Referring to FIG. 5, the anti-fingerprint material-coated substrate 300a may include a hairline-processed metal substrate S, a metal coating layer M disposed on the surface of the metal substrate S, and an anti-fingerprint coating layer A disposed on the surface of the metal coating layer M and including polysilsesquioxane. That is, the anti-fingerprint material-coated substrate 300a illustrated in FIG. 5 is differentfrom the anti-fingerprint material-coated substrate 300 illustrated in FIG. 3, in that the metal coating layer M is disposed between the metal substrate S and the anti-fingerprint coating layer A. The embodiment will be described based on differences from those of FIG. 3.

The metal coating layer M may be used to increase adhesiveness between the metal substrate S and the anti-fingerprint coating layer A. However, the metal coating layer M is not necessarily required. The metal coating layer M may also be dispensed with in various embodiments.

When using the metal coating layer M, the metal coating layer M may have a thickness of several nanometers (nm). As described above, the anti-fingerprint material-coated substrate 300 according to the present embodiment may maintain a hairline processed surface of the metal substrate S by applying an ultrathin anti-fingerprint coating layer A to the surface of the metal substrate S. Thus, the metal coating layer M may also be formed to have a thickness within a range capable of maintaining the hairline processed surface.

The metal coating layer M may include at least one metallic element selected from the group consisting of molybdenum (Mo), zirconium (Zr), titanium (Ti), manganese (Mn), and silicon (Si), and may also be formed of an alloy composition of the metallic element. However, examples of the metallic elements applicable to the metal coating layer M are not limited thereto, and the metal coating layer M may also include any element that increases adhesiveness between the metal substrate S and the anti-fingerprint coating layer A.

Various examples of the electronic device to which the anti-fingerprint material-coated substrates 300 and 300a are applied have been described.

Next, results of testing characteristics of the anti-fingerprint material-coated substrates with respect to types of the coating composition will be described to aid understanding of the embodiments.

First, a process of manufacturing an anti-fingerprint coating composition and a method of coating a stainless-steel substrate with the coating composition for tests will be described.

The process of manufacturing the anti-fingerprint coating composition for the tests is as follows.

An anti-fingerprint coating composition is prepared by mixing polysilsesquioxane and Kocosol-100 solvent manufactured by SK global chemical Co., Ltd., in a pressed container under a nitrogen atmosphere. Then, the coating composition is stirred to a uniform state and used after removing liquid particles therefrom using a microfilter (0.6 *µ*m) of CSM.

Then, the coating composition is coated on a stainless-steel substrate as follows.

Stainless-steel coils are set into a feeding unit of a coater, and the anti-fingerprint coating composition is added to an ink pan. Then, the coils are fed into a coater head including a pickup roll, a touch roll, and a laminate roll. While the coils pass through the rolls, the coating composition is coated on the surface of the coils.

Upon completion of the coating process, a drying process is performed. More particularly, the coils are introduced into a drying furnace partitioned into a plurality of sections and then the coating composition is dried. For example, the drying furnace may be partitioned into four sections, and temperature of each section may be controlled in the range of about 180°C to about 220°C.

The anti-fingerprint material-coated substrate 300 prepared according to the aforementioned process will be described in further detail with reference to the following examples and comparative examples.

### Example 1

An anti-fingerprint material-coated substrate is prepared by coating a stainless-steel with a coating composition prepared by mixing 15 parts by weight of solid polysilsesquioxane having methyl groups (-CH₃) as functional groups and 85 parts by weight of a Kocosol-100 solvent manufactured by SK global chemical Co., Ltd.

### Example 2

An anti-fingerprint material-coated substrate is prepared by coating a stainless-steel with a coating composition prepared by mixing 15 parts by weight of solid polysilsesquioxane having vinyl groups (-CH=CH₂) as functional groups and 85 parts by weight of the Kocosol-100 solvent manufactured by SK global chemical Co., Ltd.

### Example 3

An anti-fingerprint material-coated substrate is prepared by coating a stainless-steel with a coating composition prepared by mixing 15 parts by weight of solid polysilsesquioxane having epoxy groups as functional groups and 85 parts by weight of the Kocosol-100 solvent manufactured by SK global chemical Co., Ltd.

### Comparative Example 1

An anti-fingerprint material-coated substrate is prepared by coating a stainless-steel with a coating composition prepared by mixing 15 parts by weight of solid urethane acrylate resin and 85 parts by weight of the Kocosol-100 solvent manufactured by SK global chemical Co., Ltd.

### Comparative Example 2

An anti-fingerprint material-coated substrate is prepared by coating a stainless-steel with a coating composition prepared by mixing 15 parts by weight of solid organic siloxane (PDMS) resin and 85 parts by weight of the Kocosol-100 solvent manufactured by SK global chemical Co., Ltd.

Characteristics of the anti-fingerprint material-coated substrates 300 prepared according to Examples 1 to 3 and Comparative Examples 1 and 2 are shown in Table 3 below.

**Table 3**

| | Example 1 | Example 2 | Example 3 | Comparative Example 1 | Comparative Example 2 |
|---|---|---|---|---|---|
| Fingerprint resistance | good | good | good | good | good |
| Transparency | good | good | good | poor | good |
| Scratch resistance | good | good | excellent | poor | poor |
| Flexibility | good | good | good | good | excellent |
| Curing conditions | 200°C | photocured | 200°C | 200°C | 200°C |
| Ease of synthesis | difficult | good | difficult | easy | easy |
| Storage stability | gelation | good | good | good | good |

Referring to Table 3, it may be confirmed that all of the anti-fingerprint material-coated substrates prepared according to Examples 1 to 3 and Comparative Examples 1 and 2 exhibit good fingerprint resistance.

It may also be confirmed that the anti-fingerprint material-coated substrates prepared according to Examples 1 to 3 and Comparative Example 2 exhibit good transparency, while the anti-fingerprint material-coated substrate according to Comparative Example 1 has poor transparency.

It may also be confirmed that all of the anti-fingerprint material-coated substrates according to Examples 1 to 3 exhibit good scratch resistance, while the anti-fingerprint material-coated substrate according to Comparative Example 2 exhibits poor scratch resistance.

It may also be confirmed that all of the anti-fingerprint material-coated substrates according to Examples 1 to 3 and Comparative Examples 1 and 2 exhibit good flexibility.

It may also be confirmed that the anti-fingerprint material-coated substrates according to Examples 2 and 3 and Comparative Examples 1 and 2 exhibit good storage stability, while the anti-fingerprint material-coated substrate according to Example 1 exhibits poor storage stability.

Based on the test results, it was confirmed that the anti-fingerprint material-coated substrate according to Example 3 exhibited good fingerprint resistance, excellent scratch resistance, good flexibility, and good storage stability. That is, it was confirmed that the coating layer has excellent characteristics when the anti-fingerprint coating composition includes polysilsesquioxane, which has the epoxy group as the functional group, as a main component.

As is apparent from the above description, according to the anti-fingerprint material-coated substrate and the electronic device including the same, the following effects may be obtained.

First, Since the anti-fingerprint coating layer formed of the organic-inorganic hybrid material has high transparency, metallic gloss of the substrate may be maintained.

Also, the coating layer may have a high surface hardness due to high hardness of the organic-inorganic hybrid material, thereby improving durability of products.

In addition, the anti-fingerprint coating layer according to an embodiment is applied as an ultrathin film, metallic tactile impression of the substrate may be maintained. More particularly, the user may have not only metallic tactile impression of the substrate but also hairline tactile impression of the surface of the substrate by hand.

Also, since the substrate has an irregular surface with protrusions and grooves, light incident on the substrate is diffusely reflected, and thus the user may not be dazzled.

Although the anti-fingerprint material-coated substrates and the electronic devices to which the anti-fingerprint material-coated substrate is applied according to embodiments of the present disclosure have been shown and described, it would be appreciated by those skilled in the art that changes may be made in these embodiments without departing from the principles and spirit of the disclosure, the scope of which is defined in the claims and their equivalents.

## Claims

1. A device comprising:
a housing formed of a hairline-processed metal substrate; and
an anti-fingerprint coating layer comprising polysilsesquioxane disposed on a surface of the housing.

2. The device according to claim 1, wherein the polysilsesquioxane has a structural unit represented by Formula 1 below:
Formula 1 RSiO_{3/2}
where R comprises at least one selected from the group consisting of an epoxy group, an alkyl group, and a vinyl group.

3. The device according to claim 1, wherein the anti-fingerprint coating layer has a thickness of 0.01 to 1.0 *µ*m.

4. The device according to claim 1, wherein the anti-fingerprint coating layer is formed by coating the surface of the housing with a coating composition comprising the polysilsesqioxane.

5. The device according to claim 4, wherein the coating composition comprises 0.1 to 60parts by weight of the polysilsesquioxane based on a total weight of the coating composition.

6. The device according to claim 1, wherein:
all or a portion of the surface of the housing is hairline-processed, and
the hairline-processed portion of the surface of the housing has a surface roughness of 150 to 300 nm.

7. The device according to claim 1, wherein the housing is formed of a stainless-steel material.

8. The device according to claim 1, further comprising a metal coating layer disposed between the housing and the anti-fingerprint coating layer.

9. The device according to claim 8, wherein the metal coating layer comprises at least one metallic element selected from the group consisting of molybdenum (Mo), zirconium (Zr), titanium (Ti), manganese (Mn), and silicon (Si).

10. The device according to claim 1, wherein the device comprises at least one selected from the group consisting of a refrigerator, a robot cleaner, a display apparatus, an air conditioner, and a mobile device.
